# FASCICULE DE BREVET EUROPEEN

(11) **EP 0 690 229 B1**
(45) Date de publication et mention de la délivrance du brevet: **04.10.2001**
(21) Numéro de dépôt: 95108512.5
(22) Date de dépôt: 02.06.1995
(51) Int. Cl.: F04B 7/00, F04B 15/02, F04B 1/18, B29C 47/20

(54) **Pompe volumétrique à boisseau**
Verdrängerpumpe with Drehschieber
Positive displacement pump with a rotary valve

(30) Priorité: 28.06.1994 FR 9408303
(43) Date de publication de la demande: 03.01.1996
(73) Titulaire: SEDEPRO, F-75015 Paris (FR)
(72) Inventeur: Deal, Michel, F-03110 St-Remy-en-Rollat (FR); Hinc, Henri, F-63400 Chamalieres (FR)
(74) Mandataire: Bauvir, Jacques

(56) Documents cités:
- DE-C- 844 535
- FR-A- 572 925
- FR-A- 1 522 530
- GB-A- 792 081
- US-A- 3 143 076
- US-A- 3 295 451
- US-A- 3 327 640
- US-A- 5 261 795

## Description

La présente invention se rapporte au pompage volumétrique de matières très visqueuses, comme du caoutchouc non vulcanisé.

La fabrication de produits en caoutchouc impose d'être capable d'extruder des produits tout en les dosant quantitativement de manière très précise. Parmi les multiples applications envisageables, on peut citer l'élaboration des mélanges de caoutchouc, qui requiert le dosage précis de différents constituants de base, ou bien l'assemblage d'un produit final comme un pneumatique, qui nécessite d'extruder sur un support en rotation des quantités rigoureusement définies de mélanges de caoutchouc.

Dans ce dernier cas, le problème est rendu plus complexe du fait que, dans ce genre d'application, l'extrusion n'est pas continue, mais se produit à la demande, selon un cycle dont la période correspond au temps nécessaire pour l'assemblage de chaque objet fabriqué, par exemple de chaque pneumatique. Il est important d'atteindre une parfaite maîtrise des quantités extrudées y compris pendant les phases d'arrêt et de départ de l'extrusion.

Dans ce but, de préférence, on s'assure que le débit de matière extrudée ne dépend que d'un paramètre de commande de la pompe, à savoir par exemple la vitesse de rotation d'un arbre de commande, et ceci d'une telle façon que le débit soit à tout instant rigoureusement proportionnel à la vitesse de rotation de l'arbre de commande. Par le brevet US 5261795, on connaît déjà une pompe volumétrique, ayant dans l'une de ses variantes deux pistons et des billes anti-retour commandées par tiges et basculeur. Cette pompe répond à ces objectifs. Dans un autre contexte, par le brevet FR 572 925, on connaît aussi une pompe aspirante refoulante et par le brevet US 3 295 451, on connait un convertisseur de puissance hydraulique qui tous deux montrent un organe distributeur rotatif.

Le but de la présente invention est de perfectionner une pompe telle que celle décrite dans le brevet US 5 261 795, en particulier de l'alléger, à débit inchangé à un régime donné, sans préjudice aucun quant à sa précision volumétrique. Un autre but de l'invention est de faciliter l'écoulement de la matière refoulée, car les formules de mélange de caoutchouc utilisées dans les applications à l'industrie du pneumatique peuvent donner des produits de très haute viscosité.

L'invention propose une pompe volumétrique pour matière visqueuse, ayant un corps comportant une ouverture d'alimentation pour introduire la matière dans la pompe et un orifice de sortie de la matière hors de la pompe, ladite pompe comportant au moins un piston de refoulement coulissant dans un cylindre entre un point mort bas et un point mort haut, une phase de refoulement intervenant pendant la course entre le point mort bas et le point mort haut, ladite pompe comportant des passages d'admission et de refoulement débouchant dans le ou lesdits cylindres, lesdits passages d'admission et de refoulement étant aménagés dans ledit corps en des endroits séparés les uns des autres, chaque passage d'admission étant occulté par le piston de refoulement pendant son mouvement depuis le point mort bas en direction du point mort haut, ladite pompe comportant une vis de gavage, en rotation dans une chambre de transfert disposée entre ladite ouverture d'alimentation de la pompe et le ou lesdits passages d'admission pour remplir le ou lesdits cylindres de ladite matière en phase d'admission, caractérisée en ce que ladite pompe comportant un organe distributeur rotatif, ledit organe distributeur rotatif étant entraîné directement par la vis de gavage, ledit organe distributeur rotatif étant pourvu d'un évidement en communication en permanence avec l'orifice de sortie le corps comportant un palier dans lequel tourne ledit organe distributeur, celui-ci et ledit palier ayant des surfaces de révolution adaptées l'une à l'autre, l'évidement dudit organe distributeur aboutissant à la surface de révolution dudit organe, la pompe comportant une canalisation par cylindre, ladite canalisation débouchant d'un côté dans le passage de refoulement, et de l'autre, à ladite surface de révolution dudit palier, ladite canalisation et ledit évidement étant conformés les unes par rapport à l'autre de telle sorte que ledit organe distributeur, par sa rotation, met en communication le cylindre avec ledit orifice de sortie pendant la phase de refoulement du piston correspondant, et isole ledit cylindre de l'orifice de sortie en dehors des phases de refoulement.

Grâce à l'utilisation d'un organe distributeur rotatif, le débit dont la pompe est capable est très largement amélioré pour un encombrement de la pompe donné, et toutes choses égales par ailleurs. En effet, par rapport aux pompes connues par le brevet US 5261795 précité, on peut plus facilement loger des pistons supplémentaires.

Sous l'un des aspects de l'invention, le ou lesdits pistons et ledit organe distributeur de ladite pompe sont actionnés mécaniquement et de façon synchrone par un seul arbre mécanique de commande. Cela n'exclu bien entendu pas qu'il y ait deux chaînes cinématiques actionnant l'une le ou lesdits pistons et l'autre ledit organe distributeur. Cependant, cela signifie que ces deux chaînes cinématiques se rejoignent en amont et sont elles-mêmes entraînées par un seul arbre mécanique de commande.

Dans une variante très avantageuse, en utilisant au moins deux pistons de refoulement, la quantité de matière expulsée par l'orifice de sortie étant directement proportionnelle à l'angle total balayé par ledit arbre de commande. Dès lors, le débit de la pompe est à tout instant fonction de la vitesse de rotation de l'arbre de commande. Même en utilisant une pompe à un seul piston répondant aux caractéristiques de l'invention, grâce à la commande directe et synchrone de piston et de l'organe de distribution, le débit moyen, c'est à dire le débit observé sur une période de temps supérieure à un cycle, est directement proportionnel à la vitesse de l'arbre de commande. La pompe de l'invention permet de délivrer un débit donné en choisissant une vitesse d'actionnement adéquate pour l'arbre d'entrée. Ce débit est ainsi parfaitement reproductible au moins pour une matière donnée.

Sous un autre aspect de l'invention, le corps comporte un palier dans lequel tourne ledit organe distributeur, celui-ci et ledit palier ayant des surfaces de révolution adaptées l'une à l'autre, l'évidement dudit organe distributeur comprenant un dégagement aboutissant à la surface de révolution dudit organe, et dans laquelle le corps comporte autant de canalisations que de cylindres, chaque canalisation débouchant d'un côté dans le passage de refoulement, et de l'autre, à la surface de révolution dudit palier en des points alignés et régulièrement répartis sur ladite surface de révolution dudit palier, de sorte qu'un même dégagement passe successivement devant chacune desdites canalisations au cours de son mouvement de rotation, ledit dégagement et lesdites canalisations étant conformés les unes par rapport à l'autre de sorte que ledit organe distributeur, par sa rotation, met en communication le cylindre avec ledit orifice de sortie pendant la phase de refoulement du piston correspondant, et isole ledit cylindre de l'orifice de sortie en dehors des phases de refoulement.

Afin de bien faire comprendre l'invention, deux mises en oeuvres de celle-ci sont décrites, chacune avec l'aide de trois figures :
la figure 1 est une coupe suivant AA à la figure 2;
la figure 2 est une coupe suivant CC à la figure 1;
la figure 3 illustre le développement à plat de la came utilisée dans la pompe illustrée aux figures 1 et 2;
la figure 4 est une coupe suivant BB à la figure 5;
la figure 5 est une coupe suivant DD à la figure 4;
la figure 6 illustre le développement à plat de la came utilisée dans la pompe illustrée aux figures 4 et 5;
la figure 7 est une vue d'ensemble de la pompe.

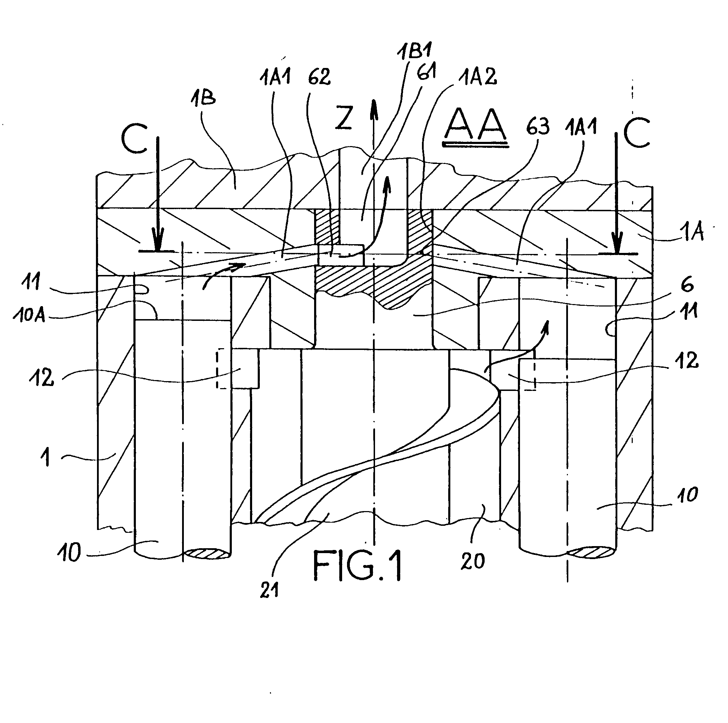

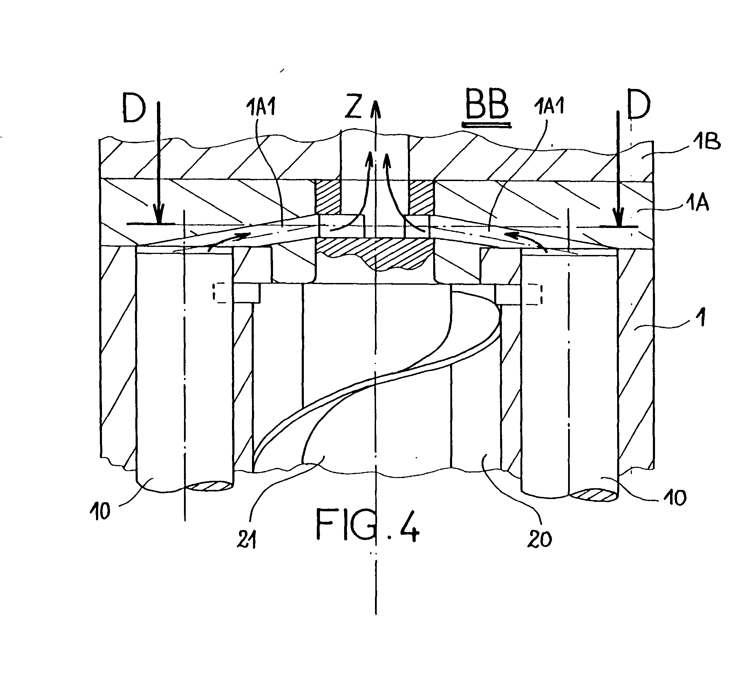

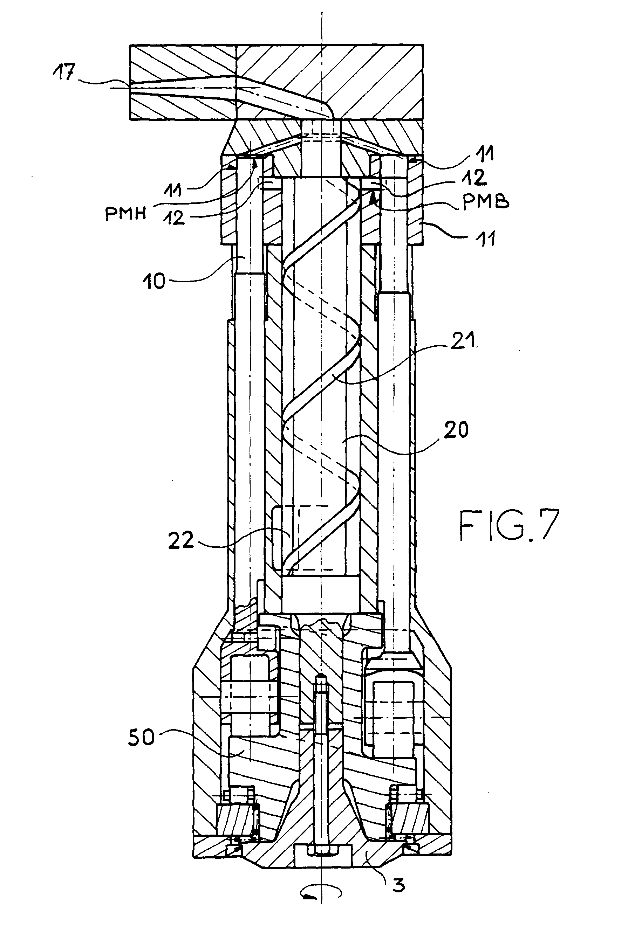

Pour une compréhension complète de l'invention, le lecteur est invité à se reporter au brevet US 5261795, La première variante de l'invention est illustrée aux figures 1 à 3. La seconde variante de l'invention est décrite aux figures 4 à 6. La figure 7 illustre l'arrangement général de la pompe et permet de bien comprendre des caractéristiques utilisées dans les deux variantes.

La première variante montre une pompe à deux pistons de refoulement 10, dont les mouvements entre point mort bas et point mort haut sont parallèles à l'axe Z de la pompe. La figure 1 (de même que la figure 4) montre une coupe suivant un plan contenant l'axe Z de la pompe. On aperçoit le corps 1 de la pompe, comportant (voir figure 7) une ouverture d'alimentation 22, ainsi qu'un orifice de sortie 17 conformé de manière convenable, ayant par exemple l'allure d'une fente. Les pistons 10 sont disposés axialement dans le corps 1 de la pompe.

A la figure 1, on voit les pistons 10 coulissant chacun dans un cylindre 11 creusé dans le corps 1 de la pompe. Les cylindres sont donc fixes par rapport au corps de la pompe. On voit une vis de gavage 21 tournant dans une chambre de transfert 20 centrale, autour de laquelle sont disposés lesdits cylindres 11, l'axe de ceux-ci étant parallèle à l'axe Z de la pompe. Ladite vis de gavage 21 est utilisée comme moyens mécaniques dont le déplacement assure un transfert forcé de la matière depuis l'ouverture d'alimentation 22 vers chacun desdits cylindres 10. Des lumières 12 assurent la communication entre la chambre de transfert 20 et les cylindres 11, et constituent ainsi un passage d'admission aménagé dans le corps de la pompe.

A plusieurs endroits des dessins, on aperçoit des flèches telles que celle tracée au niveau de la lumière 12 de droite à la figure 1. Ces flèches symbolisent le flux de matière et aident à faire comprendre le fonctionnement de la pompe.

Le corps 1 de la pompe comporte une pièce intermédiaire 1A et un chapeau 1B, qui sont rendus solidaires du corps au montage et peuvent être considérés comme faisant fonctionnellement partie dudit corps. La pièce intermédiaire 1A recouvre les cylindres 11 du côté du refoulement ; elle est percée de canalisations 1A1 (autant que de cylindres, donc ici deux) débouchant chacune d'un côté dans un cylindre et de l'autre à la surface d'un palier 1A2, alésé concentriquement à l'axe Z de la pompe. Le palier 1A2 supporte l'organe distributeur rotatif. L'axe de celui-ci est donc parallèle à la direction du mouvement des pistons. L'organe distributeur rotatif et ledit palier sont ajustés avec un très faible jeu ; il ont des formes de révolution adaptées l'une à l'autre. Le palier 1A2 supporte également la vis de gavage 21, directement liée à l'organe distributeur. Ceci est très avantageux car on évite que la vis ne fonctionne en porte à faux, tout en rendant inutile de prévoir un roulement ou un palier de support spécifique. L'organe distributeur ainsi conçu cumule donc une fonction de collecte de la matière pompée et une fonction de palier mécanique, contribuant là aussi à la très grande compacité de la pompe.

Chacune de ces canalisations constitue ainsi un passage de refoulement aménagé dans ledit corps, en un endroit séparé de l'endroit où est aménagé le passage d'admission vers le même cylindre. Lesdites canalisations 1A1 débouchent à la surface du palier 1A2 en des points alignés circonférentiellement, et régulièrement répartis. Enfin, le chapeau 1B comporte une canalisation centrale 1B1 conduisant la matière vers l'orifice de sortie 17.

L'organe distributeur est matérialisé par un boisseau 6 tournant dans ledit palier 1A2. Le palier 1A2 et le boisseau sont ici cylindriques. Ce boisseau 6 comporte un perçage axial 61, ainsi qu'un dégagement 62, ayant l'allure d'une fente se développant perpendiculairement audit perçage. Le perçage 61 et le dégagement 62 constituent l'évidement au travers duquel la matière collectée chemine, en direction de l'orifice de sortie 17 de la pompe.

Afin d'assurer un débit de refoulement qui puisse être strictement continu (c'est à dire non pulsé), de préférence, on utilise au moins deux pistons, agencés pour que leurs phases de refoulement se suivent en séquence. On utilisera dans ce cas avantageusement une came 50 rotative, assurant un mouvement des pistons de refoulement tel que la somme des débits refoulés soit proportionnelle à la vitesse de rotation de la came 50.

Dans ce dernier cas, la facilité d'utilisation et la précision d'une telle pompe sont telles qu'il est même possible d'expulser une quantité de matière qui est inférieure à la cylindrée unitaire balayée par l'un des pistons. Ainsi, la quantité de matière expulsée est directement proportionnelle à l'angle dont on a fait tourner l'arbre de commande, même si cet angle correspond à un déplacement du piston inférieur à une course utile pendant laquelle le piston refoule effectivement de la matière. La quantité de caoutchouc refoulé par la pompe est directement proportionnelle à l'angle total balayé par son arbre de commande. Autrement dit, la quantité de caoutchouc est directement proportionnelle au nombre de tours effectués par l'arbre de commande, compte tenu d'une éventuelle fraction de tour.

Dans l'application de l'invention au pompage de caoutchoucs non vulcanisés (matière première ou compositions vulcanisables), on a constaté que l'on peut très aisément dessiner une vis de gavage 21 assurant une propulsion de la matière telle que, à partir d'un seul arbre mécanique 3, on commande non seulement à la fois le mouvement des pistons 10 et de l'organe distributeur rotatif (commandes qui doivent bien entendu être synchronisées), mais aussi le mouvement de la vis de gavage 21. Dans une réalisation fort simple de la présente invention, ladite vis de gavage 21 tourne à la même vitesse que la came 50, et que le boisseau 6.

On propose ainsi une variante constructive intéressante parce que conduisant à une pompe très compacte. Il suffit de disposer la vis de gavage 21 en prolongement direct de l'arbre de commande 3, de monter la came 50 directement sur ledit arbre de commande 3, et de disposer le boisseau 6 dans le prolongement direct de la vis de gavage 21. La vis de gavage 21 et le boisseau 6 forment ainsi deux zones séparées, axialement adjacentes, du même organe rotatif.

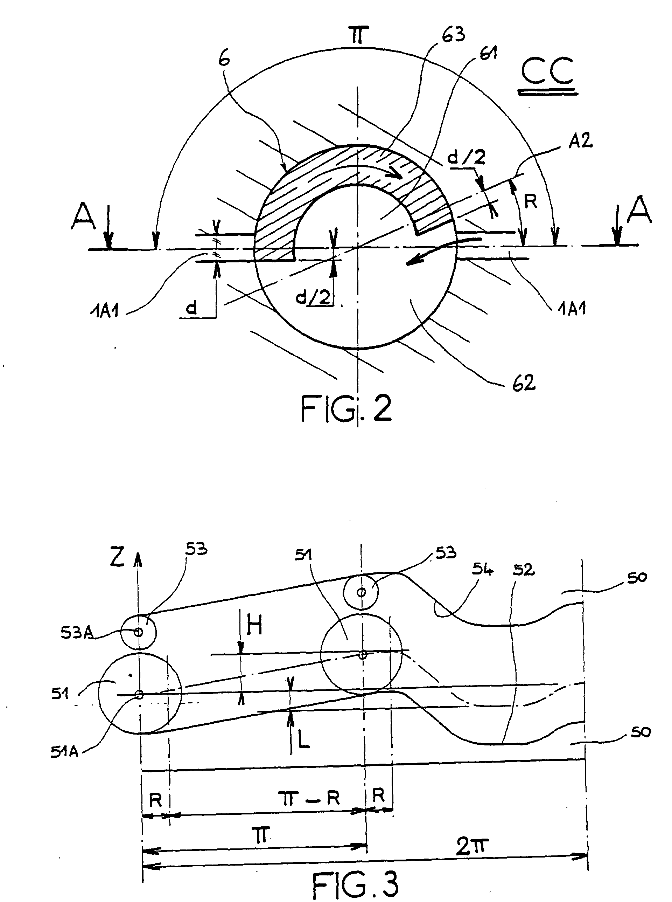

Pour la compréhension plus complète de la façon convenable de réaliser le boisseau 6 et d'organiser la commande des pistons 10, il convient de consulter plus spécialement les figures 2 et 3 en même temps que les explications données ci-dessous.

La figure 3 est un diagramme représentant le chemin de roulement 52 d'un galet 51 de poussée en direction du point mort haut, ainsi que le chemin de roulement 54 d'un galet 53 de rappel vers le point mort bas. Bien entendu, un seul et même galet pourrait assurer à la fois les mouvements vers le point mort haut et les mouvements vers le point mort bas. Les axes de rotation 51A et 53A des galets 51 et 53 superposés à la figure 3 sont solidaires d'un même piston 10. Les mouvements axiaux (mouvements parallèles à l'axe Z) desdits axes de rotation 51A et 53A et de la tête 10A du piston 10 correspondant sont identiques : à un déplacement "z" des galets 51 et 53 correspond donc un déplacement "z" identique du piston 10 correspondant. La figure 3 montre, en ordonnées, la position le long de l'axe Z desdits axes de rotation des galets, donc la position du piston 10 correspondant, par rapport à une abscisse angulaire, représentative de la position angulaire de la came 50.

Sur le diagramme de la figure 3, on voit la course utile H d'un piston : c'est la course qu'il effectue vers le point mort haut, après avoir occulté la lumière 12 correspondante. Sur la came 50, on distingue une rampe de pente constante se déployant sur π-R radians. La valeur de l'angle R caractérise l'ampleur du recouvrement entre le fonctionnement en refoulement de deux pistons dont les phases de refoulement sont successives.

Lorsqu'un galet 51 roule sur ladite rampe de pente constante, le piston 10 qui lui est solidaire assure un débit de refoulement de la matière directement proportionnel à la vitesse de rotation de la came 50, aux effets dus à la compressibilité de la matière près.

De part et d'autre de cette rampe, la came 50 comporte des tronçons dits de recouvrement R, qui débutent et se terminent à des positions angulaires séparées de π radians. Les pistons étant eux-mêmes diamétralement opposés, les groupes de galets 51 et 53 commandant chacun un piston 10 sont eux-mêmes séparés angulairement de π radians. Les tronçons de recouvrement R sont dessinés de façon à ce que la somme des débits refoulés par les deux pistons pendant leur fonctionnement en recouvrement soit identique au débit refoulé par un seul des pistons lorsque son avance est commandée par la rampe de pente constante. L'existence d'un recouvrement entre pistons permet d'assurer un fonctionnement précis et sans heurts.

Dans la seconde partie de la came 50, on voit un tronçon assurant le retour du piston considéré vers son point mort bas, mouvement au cours duquel la lumière 12 est découverte, puis une première avance, de course L, pour occulter la lumière.

Le plan de coupe selon lequel la figure 2 est établie passe par le dégagement 62 du boisseau 6. Au centre, on reconnaît le perçage 61 au travers duquel la matière est emmenée vers l'orifice de sortie 17 de la pompe. Le plan de coupe AA passe par le centre des canalisations 1A1. Le calage angulaire du boisseau 6 par rapport à la came 50 est tel que, au tout début de la phase de recouvrement, le boisseau 6 va découvrir la canalisation 1A1 correspondant au piston 10 dont le galet 51 pénètre sur le tronçon de recouvrement précédant la rampe de pente constante. Il s'agit de la canalisation 1A1 de gauche à la figure 2. Notons que le stade atteint dans le cycle de fonctionnement de la pompe, tel que représentée à la figure 2, n'est pas exactement le même que celui apparaissant à la figure 1 : dans cette dernière, le piston 10 de droite n'a pas encore occulté la lumière 12, alors qu'à la figure 2, le boisseau 6 va découvrir la canalisation 1A1 correspondante (celle de gauche à la figure 2), ce qui ne peut se faire que si le piston 10 a occulté totalement la lumière 12, assurant ainsi l'étanchéité entre la chambre de transfert 20 et l'intérieur du cylindre 11.

Afin d'occulter l'autre canalisation 1A1 au bon moment, il convient de dimensionner l'écran 63 formé par le boisseau 6 en tenant compte du recouvrement choisi. A cette fin, par rapport à la trace AA du plan de coupe, du côté de la canalisation 1A1 1 de droite, l'amplitude du recouvrement R est reportée sur le dessin. Les figures 2 et 3 correspondent exactement au même stade du cycle de fonctionnement. Sachant que la trace du plan de coupe AA et le trait d'axe A2 détermineraient les limites dudit écran si les canalisations 1A1 avaient une dimension nulle dans le sens circonférentiel, on augmente la taille de l'écran de part et d'autre dans le sens circonférentiel d'une valeur proportionnelle à la dimension réelle "d" desdites canalisations 1A1. Notons encore que la trace AA passe par le point médian des canalisations 1A1, vues dans la coupe montrée à la figure 2. L'écran 63 que forme le boisseau 6 déborde donc de l'arc π-R d'une valeur donnée par d/2 où d est le développement dans le sens circonférentiel desdites canalisations 1A1. Ainsi, quand le boisseau (donc la came 50) aura tourné d'une valeur correspondant au recouvrement R, la canalisation 1A1 correspondant au piston 10 arrivant au point mort haut sera occultée, ce qui permet à ce piston de repartir vers le point mort bas sans aspirer de matière.

Remarquons que, sans rien changer ni à la came ni au boisseau, on peut intercaler deux autres pistons à équidistance entre les deux premiers. Sous réserve d'une adaptation de la vis de gavage, éventuellement rendue nécessaire pour assurer un remplissage complet des cylindres, on peut ainsi doubler le débit nominal de la pompe, toutes autres choses égales par ailleurs. Plus généralement, on peut utiliser un nombre pair quelconque de pistons, et adapter en conséquence éventuellement la vis de gavage et/ou la cylindrée utile balayée par les pistons.

Il est aussi possible d'utiliser un nombre impair de pistons, sous réserve d'une adaptation de la came 50, que l'homme du métier n'aura aucune peine à établir à la lumière des explications données ci-dessus.

La seconde variante est décrite en renvoyant aux figures 4 à 6. Elle comporte quatre pistons. Cette pompe est agencée de façon à ce qu'un nombre pair de pistons travaillent en refoulement de façon simultanée, ceux-ci étant disposés à l'opposé l'un de l'autre par rapport à l'axe de la pompe. En cas de fortes sollicitations, cela permet de bien équilibrer les efforts auxquels la pompe est soumise.

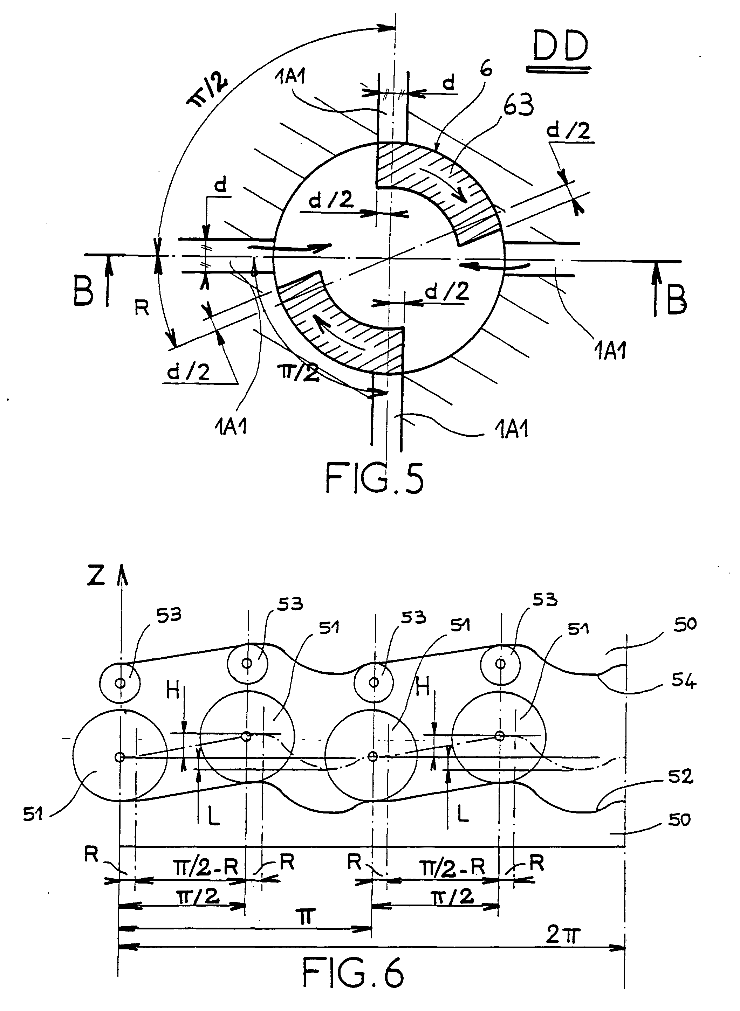

Dans ce cas, le ou lesdits évidements sont disposés de façon axisymétrique par rapport à l'axe de rotation du boisseau 6 formant distributeur rotatif. La came 50 visible à la figure 6 est divisée en deux moitiés identiques, se développant chacune sur un arc de π radians. En cheminant le long de chacune de ces moitiés, on rencontre successivement un premier tronçon de raccordement R, une rampe de pente constante se développant sur (π/2)-R radians. Tout comme expliqué précédemment, la course H est la course utile pendant laquelle le piston considéré refoule de la matière en direction de l'orifice de sortie 17. Sur la came 50, on rencontre ensuite un second tronçon de raccordement R, dessiné de façon complémentaire au premier, puis un tronçon de retour vers le point mort bas, et enfin un tronçon causant une première avance en direction du point mort haut, d'une valeur L juste suffisante pour assurer la fermeture des lumières 12.

Suivant un principe identique à ce qui a été exposé pour la première variante, les écrans 63 du boisseau 6, susceptibles d'occulter et de découvrir les canalisations 1A1, sont dimensionnées en fonction du degré de recouvrement souhaité (déterminé par l'angle R) et en fonction de la dimension circonférentielle d desdites canalisations 1A1.

Plus généralement, on peut en suivant les principes exposés construire une pompe comprenant un nombre de pistons pair et supérieur ou égal à quatre. En particulier, on peut utiliser, avec une came 50 identique, un nombre multiple de quatre pistons répartis à équidistance.

Afin de faire fonctionner une telle pompe, on peut très facilement l'accoupler à une source de puissance imprimant un couple sur l'arbre de commande 3. Par exemple, le corps 1 de la pompe peut très aisément être saisi par un robot manipulateur, transmettant le mouvement à un arbre de commande 3, et assurant tous les déplacements souhaitables en fonction de l'application retenue.

L'invention porte également sur un procédé de fabrication d'un pneumatique, dans lequel une ébauche crue est assemblée progressivement en déposant sur un support rotatif les constituants prédéfinis à l'endroit voulu, la dépose de certains des constituants en caoutchouc au moins étant effectuée en amenant l'orifice de sortie d'au moins une pompe selon l'invention par devant ledit support et en conférant audit orifice les mouvements relatifs convenables par rapport audit support pendant que celui-ci est entraîné en rotation.

Sur la base des principes exposés, l'homme du métier n'aura aucune peine à adapter la pompe selon l'application exacte qu'il souhaite en faire. La forme exacte de l'organe distributeur, ainsi que du dispositif de commande des mouvements des pistons et dudit organe distributeur peut bien entendu comporter de multiples variantes. On peut aussi occulter le passage d'admission vers les cylindres par un boisseau, qui peut former une seule pièce avec le boisseau utilisé au refoulement. De même, les pistons et cylindres peuvent avoir une allure très différente de ce qui a été illustré. On pourrait utiliser un piston plongeur, dans ce cas, le terme "cylindre" désignerait plutôt une chambre de pompage. Une telle pompe s'avère extrêmement robuste et précise. En l'utilisant pour des matériaux aussi difficiles à pomper que des compositions de caoutchouc vulcanisables du genre de celles utilisées dans l'industrie du pneumatique, elle assure un service fiable.

## Revendications

1. Pompe volumétrique pour matière visqueuse, ayant un corps (1) comportant une ouverture d'alimentation pour introduire la matière dans la pompe et un orifice de sortie de la matière hors de la pompe, ladite pompe comportant au moins un piston (10) de refoulement coulissant dans un cylindre (11) entre un point mort bas et un point mort haut, une phase de refoulement intervenant pendant la course entre le point mort bas et le point mort haut, ladite pompe comportant des passages d'admission et de refoulement débouchant dans le ou lesdits cylindres, lesdits passages d'admission et de refoulement étant aménagés dans ledit corps (1) en des endroits séparés les uns des autres, chaque passage d'admission étant occulté par le piston de refoulement pendant son mouvement depuis le point mort bas en direction du point mort haut, ladite pompe comportant une vis de gavage (21), en rotation dans une chambre de transfert (20) disposée entre ladite ouverture d'alimentation de la pompe et le ou lesdits passages d'admission pour remplir le ou lesdits cylindres de ladite matière en phase d'admission, **caractérisée en ce que** ladite pompe comportant un organe distributeur rotatif (6), ledit organe distributeur rotatif (6) étant entraîné directement par la vis de gavage (21), ledit organe distributeur rotatif étant pourvu d'un évidement en communication en permanence avec l'orifice de sortie, le corps comportant un palier (1A2) dans lequel tourne ledit organe distributeur (6), celui-ci et ledit palier ayant des surfaces de révolution adaptées l'une à l'autre, l'évidement dudit organe distributeur aboutissant à la surface de révolution dudit organe, la pompe comportant une canalisation par cylindre, ladite canalisation débouchant d'un côté dans le passage de refoulement, et de l'autre, à ladite surface de révolution dudit palier, ladite canalisation et ledit évidement étant conformés les unes par rapport à l'autre de telle sorte que ledit organe distributeur (6), par sa rotation, met en communication le cylindre (11) avec ledit orifice de sortie pendant la phase de refoulement du piston (10) correspondant et isole ledit cylindre (11) de l'orifice de sortie en dehors des phases de refoulement.

2. Pompe selon la revendication 1, comportant au moins deux pistons (10), agencée pour que les phases de refoulement desdits pistons se succèdent, dans laquelle le corps (1) comporte autant de canalisations (1A1) que de cylindres, chaque canalisation (1A1) débouchant d'un côté dans le passage de refoulement de chaque cylindre, et de l'autre à la surface de révolution dudit palier (1A2) en des points alignés et régulièrement répartis sur ladite surface de révolution dudit palier, de sorte qu'un même évidement passe successivement devant chacune desdites canalisations au cours de son mouvement de rotation.

3. Pompe selon la revendication 1 ou 2, dans laquelle le ou lesdits pistons (10) et ledit organe distributeur sont actionnés mécaniquement et de façon synchrone par un seul arbre mécanique de commande.

4. Pompe selon l'une des revendications 1 à 3, comportant au moins deux pistons (10), dans laquelle un dispositif à came (50) entraîné par ledit arbre de commande assure un mouvement des pistons (10) de refoulement tel que la somme des débits refoulés soit exactement proportionnelle à la vitesse de rotation dudit arbre de commande.

5. Pompe selon l'une des revendications 1 à 4, comportant un nombre de pistons (10) pair et supérieur ou égal à quatre, agencée de façon à ce qu'un nombre pair de pistons travaillent en refoulement de façon simultanée, ceux-ci étant disposés à l'opposé l'un de l'autre par rapport à l'axe central de la pompe.

6. Pompe selon l'une des revendications 1 à 5, dans laquelle l'évidement dudit organe distributeur (6) consiste en un dégagement (62) et un perçage (61), ledit perçage étant disposé coaxialement à l'axe de rotation dudit distributeur (6), ledit perçage (61) débouchant vers ledit orifice de sortie.

7. Pompe selon la revendication 5, dans laquelle ledit évidement estdisposé de façon axisymétrique par rapport à l'axe de rotation dudit distributeur (6).

8. Pompe selon l'une des revendications 1 à 7, dans laquelle ledit organe distributeur rotatif (6) est coaxial à la vis de gavage (21).

9. Pompe selon l'une des revendications 1 à 8, dans laquelle ladite vis de gavage tourne dans une chambre de transfert (20) centrale autour de laquelle sont disposés lesdits cylindres (11).

10. Pompe selon l'une des revendications 1 à 9, dans laquelle l'axe dudit organe distributeur rotatif est disposé parallèlement à la direction du mouvement du ou des pistons de refoulement.

11. Procédé de fabrication d'un pneumatique, dans lequel une ébauche crue est assemblée progressivement en déposant sur un support rotatif les constituants prédéfinis à l'endroit voulu, la dépose de certains des constituants en caoutchouc au moins étant effectuée en amenant l'orifice de sortie d'au moins une pompe selon l'une des revendications 1 à 10par devant ledit support et en conférant audit orifice les mouvements relatifs convenables par rapport audit support pendant que celui-ci est entraîné en rotation.

## Patentansprüche

1. Volumetrische Pumpe für zähflüssigen Werkstoff, mit einem Körper (1), der eine Einfüllöffnung zum Einführen von Werkstoff in die Pumpe und eine Öffnung für den Austritt des Werkstoffs aus der Pumpe aufweist, wobei die Pumpe mindestens einen Förderkolben (10) aufweist, der in einem Zylinder (11) zwischen einem unteren Totpunkt und einem oberen Totpunkt gleitet, wobei eine Förderphase während des Hubs zwischen dem unteren Totpunkt und dem oberen Totpunkt auftritt, wobei die Pumpe Einlaß- und Förderkanäle aufweist, die in den oder die Zylinder münden, wobei die Einlaß- und Förderkanäle im Körper (1) an Stellen eingearbeitet sind, die voneinander getrennt sind, wobei jeder Einlaßkanal vom Förderkolben während seiner Bewegung vom unteren Totpunkt in Richtung des oberen Totpunkts verdeckt wird, wobei die Pumpe eine Verdichtungsschraube (21) aufweist, die in einer Übertragungskammer (20) dreht, die zwischen der Einfüllöffnung der Pumpe und dem Einlaßkanal oder den Einlaßkanälen angeordnet ist, um den oder die Zylinder in der Einlaßphase mit dem Werkstoff zu füllen, **dadurch gekennzeichnet, daß** die Pumpe eine drehende Verteilereinrichtung (6) aufweist, wobei diese drehende Verteilereinrichtung (6) direkt von der Verdichtungsschraube (21) angetrieben wird, wobei die drehende Verteilereinrichtung mit einer Aussparung versehen ist, die permanent mit der Austrittsöffnung verbunden ist, wobei der Körper eine Lagerfläche (1A2) aufweist, in der die Verteilereinrichtung (6) dreht, wobei diese Verteilereinrichtung und die Lagerfläche aneinander angepaßte drehsymmetrische Oberflächen aufweisen, wobei die Aussparung der Verteilereinrichtung an der drehsymmetrischen Oberfläche der Einrichtung mündet, wobei die Pumpe je Zylinder eine Rohrleitung aufweist, wobei diese Rohrleitung einerseits im Förderkanal und andererseits an der drehsymmetrischen Oberfläche der Lagerfläche mündet, wobei die Rohrleitung und die Aussparung im Verhältnis zueinander so ausgebildet sind, **daß** die Verteilereinrichtung (6) durch ihre Drehung den Zylinder (11) während der Förderphase des entsprechenden Kolbens (10) mit der Austrittsöffnung in Verbindung setzt und den Zylinder (11) außerhalb der Förderphasen von der Austrittsöffnung isoliert.

2. Pumpe nach Anspruch 1, die mindestens zwei Kolben (10) aufweist, die so angeordnet sind, daß die Förderphasen der Kolben aufeinander folgen, bei der der Körper (1) ebenso viele Rohrleitungen (1A1) wie Zylinder aufweist, wobei jede Rohrleitung (1A1) einerseits in den Förderkanal jedes Zylinders und andererseits an der drehsymmetrischen Oberfläche der Lagerfläche (1A2) an Punkten mündet, die fluchtend angeordnet und regelmäßig auf der drehsymmetrischen Oberfläche der Lagerfläche verteilt sind, so daß dieselbe Aussparung während ihrer Drehbewegung nacheinander vor jeder der Rohrleitungen vorbeiläuft.

3. Pumpe nach Anspruch 1 oder 2, bei der der oder die Kolben (10) und die Verteilereinrichtung mechanisch und synchron von einer einzigen Steuerwelle betätigt werden.

4. Pumpe nach einem der Ansprüche 1 bis 3, die mindestens zwei Förderkolben (10) aufweist, bei der eine Nockenvorrichtung (50), die von der Steuerwelle angetrieben wird, eine derartige Bewegung der Förderkolben (10) gewährleistet, daß die Summe der geförderten Durchsätze genau proportional zur Drehgeschwindigkeit der Steuerwelle ist.

5. Pumpe nach den Ansprüchen 1 bis 4, die eine gerade Anzahl von Kolben (10) mindestens gleich vier aufweist und so ausgebildet ist, daß eine gerade Anzahl von Kolben gleichzeitig im Förderbetrieb arbeiten, wobei diese Kolben in Bezug auf die zentrale Achse der Pumpe einander entgegengesetzt angeordnet sind.

6. Pumpe nach einem der Ansprüche 1 bis 5, bei der die Aussparung der Verteilereinrichtung (6) aus einem Ausschnitt (62) und einer Bohrung (61) besteht, wobei die Bohrung koaxial zur Drehachse des Verteilers (6) verläuft und diese Bohrung (61) zur Austrittsöffnung hin mündet.

7. Pumpe nach Anspruch 5, bei der der Ausschnitt in Bezug auf die Drehachse des Verteilers (6) achssymmetrisch angeordnet ist.

8. Pumpe nach einem der Ansprüche 1 bis 7, bei der die drehende Verteilereinrichtung (6) koaxial zur Verdichtungsschraube (21) ist.

9. Pumpe nach einem der Ansprüche 1 bis 8, bei der die Verdichtungsschraube in einer zentralen Übertragungskammer (20) dreht, um die herum die Zylinder (11) angeordnet sind.

10. Pumpe nach einem der Ansprüche 1 bis 9, bei der die Achse der drehenden Verteilereinrichtung parallel zur Bewegungsrichtung des oder der Förderkolben verläuft.

11. Herstellungsverfahren für einen Luftreifen, bei dem ein unverarbeiteter Rohling progressiv zusammengesetzt wird, indem auf einen drehbaren Träger die vorbestimmten Bestandteile an der gewünschten Stelle aufgebracht werden, wobei das Aufbringen zumindest bestimmter Bestandteile aus Kautschuk durchgeführt wird, indem die Austrittsöffnung mindestens einer Pumpe gemäß einem der Ansprüche 1 bis 10 vor den Träger gebracht wird und indem dieser Öffnung die entsprechenden relativen Bewegungen in Bezug auf diesen Träger verliehen werden, während dieser in Drehung versetzt wird.

## Claims

1. Positive-displacement pump for viscous material, having a body (1) comprising a supply opening for introducing the material into the pump, and an outlet orifice for letting the material out of the pump, said pump comprising at least one delivery piston (10) sliding in a cylinder (11) between a bottom dead centre and a top dead centre, a delivery phase occurring during the stroke between the bottom dead centre and the top dead centre, said pump comprising inlet and delivery passages emerging in said cylinder or cylinders, said inlet and delivery passages being formed in said body (1) at points which are separate from one another, each inlet passage being closed off by the delivery piston during its movement from the bottom dead centre towards the top dead centre, said pump comprising a feed screw (21) rotating in a transfer chamber (20) arranged between said supply opening of the pump and said inlet passage or passages for filling said cylinder or cylinders with said material in the inlet phase, **characterised in that** said pump comprises a rotary distributor member (6), said rotary distributor member (6) being driven directly by the feed screw (21), said rotary distributor member being provided with a recess in permanent communication with the outlet orifice, the body comprising a bearing (1A2) in which said distributor member (6) turns, said member and said bearing having surfaces of revolution which are adapted to each other, the recess of said distributor member ending at the surface of revolution of said member, the pump comprising one duct per cylinder, said duct opening on one side into the delivery passage, and on the other side, onto said surface of revolution of said bearing, said duct and said recess being shaped relative to each other so that said distributor member (6), through rotating, places the cylinder (11) in communication with said outlet orifice during the delivery phase of the corresponding piston (10), and isolates said cylinder (11) from the outlet orifice outside of the delivery phases.

2. Pump according to claim 1, comprising at least two pistons (10), arranged such that the delivery phases of said pistons succeed one another, in which the body (1) comprises as many ducts (1A1) as there are cylinders, each duct (1A1) emerging, on the one hand, in the delivery passage of each cylinder and, on the other hand, at the surface of revolution of said bearing (1A2) at points which are in line and uniformly distributed along said surface of revolution of said bearing, so that one and the same cutout passes across each of said ducts in succession during its rotational movement.

3. Pump according to Claim 1 or 2, in which said piston or pistons (10) and said distributor member are actuated mechanically and synchronously by one single mechanical control shaft.

4. Pump according to one of claims 1 to 3, comprising at least two pistons (10), in which pump a cam device (50) driven by said control shaft provides movement of the delivery pistons (10) such that the sum of the flow rates delivered is exactly proportional to the speed of rotation of said control shaft.

5. Pump according to one of claims 1 to 4, comprising an even number of pistons (10) greater than or equal to four, the pump being arranged so that an even number of pistons operate in delivery mode simultaneously, these pistons being located opposite each other relative to the central axis of the pump.

6. Pump according to one of claims 1 to 5, in which the recess of said distributor member (6) consists of a cutout (62) and of a bore (61), said bore being located coaxially to the axis of rotation of said distributor (6), said bore (61) emerging towards said outlet orifice.

7. Pump according to claim 5, in which said recess is located axisymmetrically relative to the axis of rotation of said distributor (6).

8. Pump according to one of claims 1 to 7, in which said rotary distributor member (6) is coaxial with the feed screw (21).

9. Pump according to one of claims 1 to 8, in which said feed screw (21) turns in a central transfer chamber (20) about which said cylinders (11) are arranged.

10. Pump according to one of claims 1 to 9, in which the axis of said rotary distributor member is arranged parallel to the direction of movement of the delivery piston or pistons.

11. Method for manufacturing a tyre, in which an uncured blank is progressively assembled by laying the predefined constituents on a rotary support at the desired point, at least some of the rubber constituents being laid by bringing the outlet orifice of at least one pump according to one of claims 1 to 10 across in front of said support and by giving said orifice the suitable relative motions with respect to said support while this support is being driven in rotation.
